**Europäisches Patentamt**

**European Patent Office**

**Office européen des brevets**

(11) Veröffentlichungsnummer: **0 250 405 B1**

(12) **EUROPÄISCHE PATENTSCHRIFT**

(45) Veröffentlichungstag der Patentschrift:
02.05.91 Patentblatt 91/18

(51) Int. Cl.⁵: **H01F 7/16,** F16D 59/02, H02K 7/102

(21) Anmeldenummer: **86901046.2**

(22) Anmeldetag: **13.02.86**

(86) Internationale Anmeldenummer:
**PCT/DE86/00051**

(87) Internationale Veröffentlichungsnummer:
**WO 86/05028 28.08.86 Gazette 86/19**

(54) **MAGNETKÖRPER FÜR MOTORBREMSEN.**

(30) Priorität: **20.02.85 PCT/EP85/00055**

(43) Veröffentlichungstag der Anmeldung:
**07.01.88 Patentblatt 88/01**

(45) Bekanntmachung des Hinweises auf die
Patenterteilung:
**02.05.91 Patentblatt 91/18**

(84) Benannte Vertragsstaaten:
**DE FR GB**

(56) Entgegenhaltungen:
**DE-C- 966 539**

(56) Entgegenhaltungen:
**FR-A- 517 084**
**FR-A- 1 399 381**
**FR-A- 1 511 762**
**FR-A- 2 432 117**

(73) Patentinhaber: **ZAHNRADFABRIK
FRIEDRICHSHAFEN AKTIENGESELLSCHAFT**
**Löwentaler Strasse 100 Postfach 2520**
**W-7990 Friedrichshafen 1 (DE)**

(72) Erfinder: **WINKELMANN, Siegfried**
**Birkensteige 15**
**W-7992 Tettnang 1 (DE)**
Erfinder: **SCHNEIDER, Rudolf**
**Dornier-Strasse 19**
**W-7996 Meckenbeuren (DE)**

## Beschreibung

Die Erfindung betrifft Magnetkörper nach dem Oberbegriff des Anspruchs 1 und geht aus von den üblicherweise am zweiten Wellenende von Motoren und ähnlichen Antrieben etc. angeordneten Magnetkörpern mit Gleichstrom-Erregerspulen, welche mit Distanz- bzw. Einstell-Stücken sowie mit Schrauben direkt am Motorflansch befestigt werden. Solche Magnetkörper zeigen beispielsweise die Montagehinweisblätter 3/83 der Firma k. E. Brinkmann GmbH, D-4924 Barntrup oder H. L. E. 14.438/9.79/65 432 der Firma H. Lenze kG, D-4923 Extertal.

Die hiernach bekannten Magnetkörper sind als massive ein- oder zweistückige Rotationsteile hergestellt, die im Halbschnitt eine zur Ankerscheibe hin offene U-Form aufweisen, deren Innenraum die z. B. auf einen kunststoffträger ringförmig aufgewickelte Erregerspule aufnimmt. Damit bilden Außen- und Innenschenkel der U-Form axiale Polflächen, und der magnetische Rückschluß erfolgt über den Rücken der U-Form des Magnetkörpers. Zwischen dem Magnetkörper und dem Motorflansch ist drehfest aber axial beweglich eine, die offene Seite der U-Form im stromlosen Zustand mit Luftspalt überdeckende Ankerscheibe vorgesehen, gegen welche magnetseitig gehäusefest abgestützte Federn anliegen, so daß die Ankerscheibe im spannungslosen Zustand gegen eine mit der Motorwelle umlaufende Reibscheibe durch Federkraft angepreßt wird.

Die Verwendung solcher Bremsen ist nicht auf die unmittelbare Anbringung an Elektromotoren beschränkt, sondern kann auch auf Wellen anderer Antriebe ähnlich eingesetzt werden.

Für Großserienfertigungen hat sich die vorbekannte Gestaltung der Magnetkörper indessen noch nicht als kostengünstig und materialsparend genug erwiesen :

– Zunächst stellte die Herstellung des Magnetkörpers als meistens noch nachzubearbeitendes Gieß- oder Preßteil einen Kostenfaktor von erheblichem Belang dar.

– Außerdem gelang es mit üblichen Mitteln selten, die Spulenabmessungen genau genug einzuhalten, um deren korrekte Befestigung im U-förmigen Innenraum des Magnetkörpers ohne weitere Montagehilfen bzw. Sicherungselemente zuverlässig sicherzustellen.

– Auch verursacht die Einbringung vieler lose einzusetzender Distanzstücke beim Zusammenbau der Bremsen noch Montageerschwernisse.

– Weiterhin können von den bekannten Arten von Magnetkörpern die Ansprüche für höchste elektrische Sicherheiten nur mit zusätzlichen Aufwendungen erreicht werden.

– Ebenfalls machte die geschlossene Ringbauweise des Magnetkörpers eine spezielle Kabeleinführungsöffnung und gesonderte Abdichtungen derselben bzw. Isolierungen notwendig.

Die Aufgabe der Erfindung besteht darin, eine Magnetkörper-Konstruktion zu finden, mit welcher die aufgezeigten Nachteile ohne Funktionsbeeinträchtigung vermeidbar bzw. verminderbar und die Herstellungskosten mittels großseriengerechter Fertigungsmöglichkeiten deutlich senkbar sind.

Die Lösung dieser Aufgabe wird durch die kennzeichnenden Merkmale des Anspruchs 1 dadurch erreicht, daß die konventionelle geschlossene Ringform der der Ankerplatte zugeordneten Polflächen und Rückflußquerschnitte unter Beibehaltung ihrer Größe aufgegeben und in Richtung fertigungsgünstigerer, jedoch ebenfalls ringförmig angeordneter Einzelquerschnitte geändert wurde, welche schließlich wieder den magnetischen erforderlichen Gesamtquerschnitt aufweisen können.

– Hiermit gelingt es, die Eisenteile aus Blech- bzw. Flachmaterial mit nur minimalen Fertigungsbearbeitungsflächen zu gewinnen und statt teurer Formkostenanteile für Guß- oder Preßverfahren nun mit Stanz- bzw. Schnittwerkzeugen arbeiten zu können.

– Weiterhin ist eine hochpräzise Fertigung unter Einbeziehung bisherigen Montageaufwandes z. B. durch die Doppelnutzung des Kunststoffmantels als Träger der Seitenschenkel-Einzelteile möglich geworden. Dabei sind letztere sowohl bei der Herstellung der Wicklung als auch erst bei der Endmontage anbringbar.

– Auch die unverlierbare Einbeziehung der Distanzstücke in den Kunststoffmantel erleichtert die Herstellung und Montage.

– Außerdem wird die Gefahr von Wicklungsbeschädigungen bei der Endmontage praktisch ausgeschlossen und die elektrische Sicherheit allgemein erheblich verbessert.

– So braucht das Kabel nicht mehr durch eine Bohrung im Magnetkörper-Ring radial herausgeführt werden und erfordert keinen besonderen Schutz mehr, da es nun in einem axialen Freiraum zwischen zwei benachbarten Seitenschenkel-Einzelteilen liegt, die ihrerseits radial von außen her an den Kunststoffmantel angelegt und von ihm getragen werden können.

Weitere Vorteile werden mit den in den Unteransprüchen aufgezeigten Maßnahmen erreicht :

– Nach Anspruch 2 wird erreicht, daß die als Rücken des Magnetkörpers vorgesehene Ringscheibe erst bei der Endmontage mit der Windung zusammengebaut werden braucht.

– Nach Anspruch 3 wird erreicht, daß die für die Ringanordnung der einzelnen Seitenschenkel-Teile verwendeten Elemente ebenfalls aus nur sehr wenig Bearbeitung erfordernden Flachmaterialstücken übernommen werden können.

– Nach Anspruch 4 wird erreicht, daß die Einzelteile, aus denen sich der Magnetkörper erfindungsgemäß zusammensetzt, bereits bei Ummantelung der Wicklung mit derselben fest zusammengeführt und letztere dadurch auch beschädigungsgeschützt werden kann.

- Nach Anspruch 5 wird erreicht, daß keine gesonderte Halterung der Wicklung im U-Querschnitt des Magnetkörpers mehr vorgesehen werden braucht und der Kunststoffmantel eine arbeits- und werkstoffsparende Doppelfunktion ausübt.

- Nach Ansprüchen 6 und 7 werden Kosten für separate Werkzeuge und Bereitstellung bzw. Beschaffung eingespart.

- Nach Anspruch 8 wird erreicht, daß keine lose angelieferten Distanzstücke oder Hülsen zu montieren sind und axiale Öffnungen im Kunststoffmantel auch Führungsaufgaben bei Einsatz mehrerer am Umfang verteilt angeordneter Druckfedern. von ihm mit übernommen werden können.

- Nach Anspruch 9 wird eine sehr preisgünstige und einfach zu montierende Federart bzw. Federanordnung erreicht.

Die Erfindung ist in den folgenden Zeichnungen in Einzelheiten anhand eines Beispieles dargestellt :

Fig. 1 zeigt einen Längsschnitt einer Motorbremse mit angebautem Magnetkörper.

Fig. 2 zeigt einen Querschnitt zu Fig. 1.

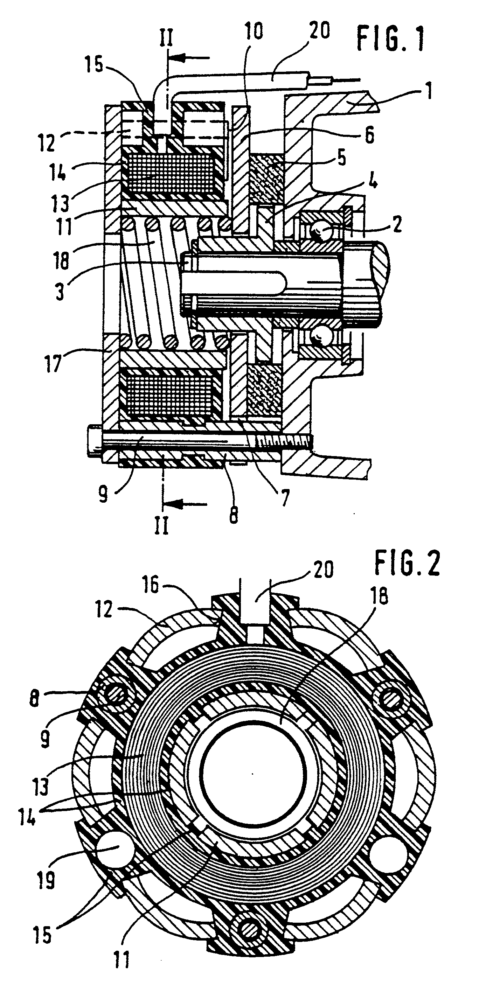

In Fig. 1 legt sich an den Motorflansch 1, welcher ein Wellenlager 2 für das bremsenseitige Wellenende 3 umfaßt, stirnseitig die aus Bremsnaben-Flansch 4 und Reibkörpern 5 zusammengesetzte Bremsscheibe im stromlosen Zustand an. Die auf der Motor abgewandten Seite der Reibkörper 5 angeordnete Ankerscheibe 6 wird im Beispiel lose radial geführt sowohl vom aus dem Wellenlager 2 vorspringenden Wellenende 3 als auch durch Ausnehmungen bzw. Bohrungen 7 an ihrem Außenrand hindurchgreifende Distanzhülsen 8 bzw. Halteschrauben 9, welche sie auch gegen Mitdrehen festhalten. Bei extrem kurzem Wellenende 3 könnte die Ankerscheibe 6 auch durch die Hülsen 8 alleine ausreichend geführt sein. In axialer Richtung weist die Ankerscheibe 6 auf jeweils einer ihrer Stirnflächen einen Luftspalt 10 auf gegenüber Stirnflächen von Seitenschenkelstücken 11, 12, aus magnetisierbarem Werkstoff, die entlang dem äußeren und inneren Umfang der Wicklung 13 bzw. des diese umschließenden Kunststoffmantels 14 koaxial zum Wellenende 3 befestigt sind.

Die z. B. an gebogenen Guß- bzw. Blechstücken bestehenden Seitenschenkelstücke 11, 12 haben dabei in Umfangsrichtung Abstand zueinander und in die vorgesehenen Lücken können Auskragungen 15 des Kunststoffmantels 14 hineingreifen, welche zusätzlich Haltenuten 16 zum radialen Arretieren der Seitenschenkelstücke 11, 12 haben können. Die Biegeradien der einzelnen Teilstücke 11, 12 brauchen hierbei nicht unbedingt auf das Zentrum des gesamten Magnetkörpers selbst bezogen sein.

In axialer Richtung werden die Seitenschenkelstücke 11, 12 zwischen der Ankerscheibe 6 einerseits und einer vorzugsweise gleichartig bemessenen Ringscheibe, die den Rücken 17 des U-Querschnittes des hieraus den einzelnen Seitenschenkelstücken 11, 12 bestehenden Magnetkörpers bilden, festgehalten und gleichzeitig gegen die Motor abgewandte Stirnseite der inneren und äußeren Seitenschenkelstücke 11, 12 zwecks guten Magnetstromdurchganges auf Anlage gehalten. In den innerhalb der innerer. Seitenschenkelstücke 11 verbleibenden Freiraum zwischen Rücken 17 und Ankerscheibe 6 ist/sind Druckfeder(n) 18 mit Vorspannung eingesetzt, welche nur bei Stromdurchgang durch die Wicklung 13 infolge der daraus verursachten Anziehungskraft des Magnetkörpers 11, 12, 13, 17 von der sich dann von den Reibkörpern 5 abhebenden Ankerscheibe 6 unter Überwindung des Luftspaltes 10 zusammengedrückt werden können.

Die Stromversorgung der Wicklung 13 erfolgt dabei über das in den Kunststoffmantel 14 in einer von dessen Auskragungen 15 eingebettete Kabel 19, welches hierbei gegen Beschädigungen günstig geschützt ist. Ebenfalls, allerdings in axialer Richtung, in den Kunststoffmantel 14 im Bereich der speichenartig vorhandenen Lücken bzw. der Auskragungen 15 eingebettet untergebracht sind die Distanzhülsen 8 bzw. Halteschrauben 9. Da sie aus dem gleichen Durchmesser wie die äußeren Seitenschenkelteilstücke 11, 12 liegen, wird der Bauraum durch entsprechend vergrößerte Außenabmessungen des Magnetkörpers gespart. Auf dem gleichen Durchmesser können in weitere Axialbohrungen des Kunststoffmantels 14 im Bereich der Aussparungen 15 auch einzelne Druckfedern 18 auf etwa dem gleichen Durchmesser wie die Distanzhülsen untergebracht werden, so daß auch der innere Freiraum des Magnetkörpers verkleinert bzw. für andere Zwecke genutzt werden könnte. Gemäß dieser Bauweise ist also zumindest keine separate Montage von Wicklung 13 und Distanzhülse 8 mehr nötig und Ankerscheibe 6 und Rücken 17 können identisch ausgeführt sein. Da die Funktion eines erfindungsgemäßen Magnetkörpers 11, 12, 13, 17 sowie auch dessen Leistung durch entsprechende Vergrößerung der magnetisch wirksamen Teilquerschnitte unter Ausnutzung der dabei vorgesehenen Lücken zwischen den Seitenschenkelstücken 11, 12 ohne Durchmesservergrößerung für Schrauben bzw. Hülsen und eventuelle Federn bei mit konventionellen Magnetkörpern vergleichbarer Leistung gelingt, kommen die material- und arbeitskostensparenden Vorteile der Erfindung sowohl Herstellern als auch Anwendern voll zugute.

Bezugszeichen

1 Motorflansch
2 Wellenlager
3 Wellenende
4 Bremsflansch
5 Reibkörper
6 Ankerscheibe
7 Ausnehmungen in 6
8 Distanzhülsen
9 Halteschrauben
10 Luftspalt
11 Seitenschenkelstücke innen
12 Seitenschenkelstücke außen
13 Wicklung
14 Kunststoffmantel
15 Auskragungen
16 Haltenuten
17 Rücken des Magnetkörpers
18 Druckfeder(n)
19 Alternative Druckfedertaschen
20 Kabel

**Ansprüche**

1. Magnetkörper (11, 12, 13, 17) für Motorbremsen,
– welcher mittels Schrauben (9), die eine axial verschiebliche Ankerscheibe (6) drehfest halten, an einem Motorflansch (1) befestigt ist, aus dem ein Wellenende (3) herausragt, auf dem ein Bremsflansch (4) mit Reibkörper (5) gehaltert ist,
– wobei der zur Ankerscheibe (6) einen massiven eisernen U-Querschnitt aufweisende Magnetkörper (11, 12, 13, 17) eine mittels Gleichstrom erregbare, mit einem Kunststoffmantel (14) umgebene Wicklung (13) beinhaltet, dadurch **gekennzeichnet,**
– daß der U-Querschnitt des Magnetkörpers (11, 12, 13, 17) aus ringförmig angeordneten Einzelquerschnittenbesteht und aus mehreren, durch speichenartig angeordnete Lücken auf Abstand gehaltenen Seitenschenkelstücken (11, 12, 17) gebildet ist,
– welche aus Eisenformteilen bestehen, die durch den die Lücken ausfüllenden Kunststoffmantel (14) zueinander und zur Wicklung (13) lagefixiert sind.

2. Magnetkörper nach Anspruch 1, dadurch **gekennzeichnet,** daß der Rücken (17) des Magnetkörpers (11, 12, 13, 17) durch eine stirnseitig gegen den Kunststoffmantel (14) und gegen die axial gerichteten inneren und äußeren Seitenschenkelstücke (11, 12) des Magnetkörpers (11, 12, 13, 17) mittels der Schrauben (9) angelegte Ringscheibe gebildet wird.

3. Magnetkörper nach Anspruch 1 oder 2, dadurch **gekennzeichnet,** daß die Seitenschenkelstücke (11, 12) des Magnetkörpers segmentartig um die Wicklung (13) herumgestellte Blechbiegeteile sind.

4. Magnetkörper nach einem der vorstehenden Ansprüche, dadurch **gekennzeichnet,** daß mindestens die Seitenschenkelstücke (11, 12) und die Wicklung (13) gemeinsam vom Kunststoffmantel (14) umspritzt sind.

5. Magnetkörper nach einem der vorstehenden Ansprüche, dadurch **gekennzeichnet,** daß der Kunststoffmantel (14) der Wicklung (13) sowohl gleichzeitig Trägerteil der Seitenschenkelstücke (11, 12) des Magnetkörpers (11, 12, 13, 17) als auch Isolierhülle der Wicklung (13) ist.

6. Magnetkörper nach einem der vorstehenden Ansprüche, dadurch **gekennzeichnet,** daß der Rücken (17) des Magnetkörpers (11, 12, 13, 17) im wesentlichen gleiche Werkstoffeigenschaften und Abmessungen wie die Ankerscheibe (6) aufweist.

7. Magnetkörper nach Anspruch 3, dadurch **gekennzeichnet,** daß die Blechbiegeteile für innere und äußere Seitenschenkelstücke (11, 12) gleiche Abmessungen aufweisen.

8. Magnetkörper nach einem der vorstehenden Ansprüche, dadurch **gekennzeichnet,** daß in den Kunststoffmantel (6) auch noch axiale Schraubenhülsen bzw. Distanzstücke (8) ode Federtaschen unverschieblich mit eingebettet sind.

9. Magnetkörper nach einem der vorstehenden Ansprüche, dadurch **gekennzeichnet,** daß nur eine einzelne Druckfeder (18) vorgesehen ist, welche als Spiralfeder ausgebildet und im radialen Lichtraum zwischen den inneren Seitenschenkeln (11) und dem Wellenende (3) axial gegen innen vorspringende Bohrungskanten der Ankerscheibe (6) und der den Rücken (17) des Magnetkörpers bildenden Ringscheibe mit Vorspannung abgestützt ist.

**Claims**

1. A magnetic body (11, 12, 13, 17) for motor brakes which is secured to a motor flange (1) by means of screws (9) which hold an axially displaceable armature disc (6) in a rotationally fixed manner, from which motor flange there projects a shaft end (3) on which a brake flange (4) with a friction body (5) is mounted, wherein the magnetic body (11, 12, 13, 17), the cross section of which in the direction towards armature disc (6) is that of a solid iron U, contains a winding (13) surrounded by a plastics sheathing (14) and energizable by means of direct current, characterised in that the U-shaped cross section of the magnetic body (11, 12, 13, 17) comprises annularly disposed individual cross sections and is formed by a plurality of side limb pieces (11, 12, 17) which are spaced apart by gaps disposed in a spoke-like manner and which comprise iron shaped parts which are fixed in position relative to one another and to the winding (13) by the plastics sheathing (14) which fills the gaps.

2. A magnetic body as claimed in claim 1, characterised in that the back (17) of the magnetic body (11, 12, 13, 17) is formed by an annular disc whose end face is applied by means of the screws (9) against the plastics sheathing (14) and against the axially directed inner and outer side limb pieces (11, 12) of the magnetic body (11, 12, 13, 17).

3. A magnetic body as claimed in claim 1 or 2, characterised in that the side limb pieces (11, 12) of the magnetic body are sheet metal bending parts disposed segmentally around the winding (13).

4. A magnetic body as claimed in one of the preceding claims, characterised in that at least the side limb pieces (11, 12) and the winding (13) are commonly extrusion-coated by the plastics sheathing (14).

5. A magnetic body as claimed in one of the preceding claims, characterised in that the plastics sheathing (14) of the winding (13) is at the same time the carrier part of the side limb pieces (11, 12) of the magnetic body (11, 12, 13, 17) as well as the insulating covering of the winding (13).

6. A magnetic body as claimed in one of the preceding claims, characterised in that the back (17) of the magnetic body (11, 12, 13, 17) has substantially the same material properties and dimensions as the armature disc (6).

7. A magnetic body as claimed in claim 3, characterised in that the sheet metal bending parts for inner and outer side limb pieces (11, 12) have the same dimensions.

8. A magnetic body as claimed in one of the preceding claims, characterised in that axial screw sleeves or spacers (8) or spring pockets are also undisplaceably embedded in the plastics sheathing (6).

9. A magnetic body as claimed in one of the preceding claims, characterised in that there is provided only a single compression spring (18) which is in the form of a spiral spring and is supported with initial stress in the radial clear space between the inner side limb pieces (11) and the shaft end (3) and axially against inwardly projecting bore edges of the armature disc (6) and of the annular disc forming the back (17) of the magnetic body.

## Revendications

1. Corps d'aimant (11, 12, 13, 17) pour freins de moteurs,
   - qui est fixé sur un flasque de moteur (1) d'où émerge une extrémité d'arbre (3), au moyen de vis (9) qui bloquent en rotation un disque d'armature (6) mobile axialement, l'extrémité d'arbre (3) portant un flasque de frein (4) muni d'éléments de friction (5),
   - le corps d'aimant (11, 12, 13, 17) comportant une section de fer massive en forme de U dirigé vers le disque d'armature (6) et renfermant un enroulement (13) à excitation par courant continu, entouré d'un manteau en matière synthétique (14),
   caractérisé en ce que :
   - la section en U du corps d'aimant (11, 12, 13, 17) comprend des sections séparées disposées en anneau et est formée de plusieurs branches latérales (11, 12, 17) séparées par des intervalles disposés radialement, et
   - les branches latérales sont faites de pièces profilées en fer qui sont positionnées, les unes par rapport aux autres et par rapport à l'enroulement (13), par le manteau en matière synthétique (14) remplissant lesdits intervalles.

2. Corps d'aimant selon la revendication 1, caractérisé en ce que le dos (17) du corps d'aimant (11, 12 ; 13, 17) est formé par un disque annulaire qui est appliqué par les vis (9) contre une face frontale du manteau en matière synthétique (14) et contre les branches latérales intérieures et extérieures (11, 12) du corps d'aimant (11, 12, 13, 17), ces branches étant dirigées axialement.

3. Corps d'aimant selon la revendication 1 ou 2, caractérisé en ce que les branches latérales (11, 12) du corps d'aimant sont des pièces de tôle cintrées, réparties en segments autour de l'enroulement (13).

4. Corps d'aimant selon l'une des revendications précédentes, caractérisé en ce qu'au moins les branches latérales (11, 12) et l'enroulement (13) sont encastrés ensemble par injection du manteau en matière synthétique (14).

5. Corps d'aimant selon l'une des revendications précédentes, caractérisé en ce que le manteau en matière synthétique (14) de l'enroulement (13) constitue à la fois un élément porteur pour les branches latérales (11, 12) du corps d'aimant (11, 12, 13, 17) et une gaine isolante pour l'enroulement (13).

6. Corps d'aimant selon l'une des revendications précédentes, caractérisé en ce que le dos (17) du corps d'aimant (11, 12, 13, 17) a sensiblement les mêmes caractéristiques de matière et les mêmes dimensions que le disque d'armature (6).

7. Corps d'aimant selon la revendication 3, caractérisé en ce que les pièces de tôle pliées formant les branches latérales intérieures et extérieures (11, 12) ont des dimensions égales.

8. Corps d'aimant selon l'une des revendications précédentes, caractérisé en ce que des douilles ou cales axiales (8) pour les vis ou des chemises pour des ressorts sont encastrées de manière non coulissante dans le manteau en matière synthétique (14).

9. Corps d'aimant selon l'une des revendications précédentes, caractérisé en ce qu'il contient un seul ressort de serrage (18), lequel est un ressort hélicoïdal logé dans l'intervalle radial entre les branches intérieures (11) et l'extrémité d'arbre (3), ce ressort étant précontraint par appui axial contre des bords intérieurs saillants du disque d'armature (6) et du disque annulaire formant le dos (17) du corps d'aimant.

FIG. 1

FIG.2